# EUROPEAN PATENT APPLICATION

(11) **EP 4 304 136 A1**
(43) Date of publication of application: **10.01.2024**
(21) Application number: 22183864.2
(22) Date of filing: 08.07.2022
(51) Int. Cl.: H04L 12/40

(54) **CONTROL AREA NETWORK DEVICES AND METHOD**

(71) Applicant: NXP B.V., 5656 AG Eindhoven (NL)
(72) Inventor: Seemann, Jochen, 5656 AG Eindhoven (NL); Elend, Bernd Uwe Gerhard, 5656 AG Eindhoven (NL)
(74) Representative: Schmütz, Christian Klaus Johannes

(57) **Abstract**

The present invention relates to a Control Area Network, CAN, device, which is configured to receive an ethernet frame, extract payload of the ethernet frame, and determine a reference tag for the payload, wherein the CAN device is also configured to create an CAN frame, which comprises the reference tag and the payload of the ethernet frame, such that the CAN frame can be transmitted with reduced CAN BUS bandwidth. The present invention also relates to another device for reconstruction of the ethernet frame form the received CAN frame. Moreover, the present invention relates to a method for the CAN device.

## Description

### TECHNICAL FIELD

The present disclosure relates to Control Area Network, CAN, devices and a method for a CAN device.

### BACKGROUND

CAN bus is a message-based communications bus protocol that is often used within automobiles. The CAN bus protocol can be used to enable communications between various electronic control units (ECUs), such as an engine control module (ECM), a power train control module (PCM), airbags, antilock brakes, cruise control, electric power steering, audio systems, windows, doors, mirror adjustment, battery and recharging systems for hybrid/electric cars, and many more. The data link layer of the CAN protocol is standardized as International Standards Organization (ISO) 11898-1. The standardized CAN data link layer protocol is in the process of being extended to provide higher data rates. The CAN protocol has been updated to also cover for example flexible data rates, in particular referring to CAN Flexible Data-Rate or "CAN FD" and will be further updated to support even higher bit rates and a higher maximum amount of data, referring to CAN XL. Data link layer and physical coding sub-layer requirements of CAN XL will be standardized as CiA 610 and later in ISO11898-1.

CAN as a message-based protocol that uses two wires to enable multiple devices to communicate messages among each other. Each message is transmitted via a corresponding frame, referred to as an CAN frame. Each frame comprises several bits of data. For each message, the data in a frame is transmitted bitwise sequentially but in such a way that if more than one device transmits frames at the same time, only the highest priority frame is able to continue while other devices stop transmitting their frames. This process, known as non-destructive "arbitration", is used by all sending devices and the device that attempts to send the highest priority message wins the arbitration. Transmitted CAN frames are received by all devices being active and connected to the same bus wires.

Ethernet communication has found in the past to be of interest as well. Ethernet communication is standardized in IEEE 802.3. Ethernet communication is based on the transmission of packets, also referred to as ethernet packets, and on the transmission of frames, also referred to as ethernet frames. An ethernet packet is used to describe the overall data the can be transmitted as a unit. The ethernet packet preferably includes an preamble, a start frame delimiter (SFD), the ethernet frame and preferably a carrier extension. The ethernet frame is arranged directly after the start frame delimiter. The ethernet frame begins with a frame header, which preferably includes source MAC address, a destination MAC address, a payload field, and preferably an EtherType field. The EtherType field may provide represent a protocol type for the payload or a length of the payload. The payload field of the ethernet frame comprises payload data. The payload data of the ethernet payload field may comprise other frames, for instance an internet protocol, IP, frame. The last field of the ethernet frame may be given by a cyclic redundancy check, CRC, field.

If not only CAN based communication but also Ethernet based communication is used for in vehicle communication, it may happen that a change between the two communication types takes place.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Aspects of the disclosure are defined in the accompanying claims.

In accordance with a first aspect of the present disclosure, a Control Area Network, CAN, device for transmitting a CAN frame is provided. The device comprising: an Ethernet interface for receiving Ethernet frames, a CAN BUS interface for transmitting CAN frames, a processing unit, and a memory unit, wherein the memory unit is configured to store a plurality of reference tags and for each reference tag allocated reference metadata, wherein the processing unit is configured to perform the following steps a.1) and a.2) for an Ethernet frame received via the Ethernet interface: a.1) acquiring metadata directly and/or indirectly comprised by the received Ethernet frame, the acquired metadata being referred to as readout metadata; and a.2) checking whether the readout metadata from step a.1) either are reference metadata allocated to a reference tag stored in the memory unit or are new metadata; wherein the processing unit is configured to perform the following steps c.1) to c.2) if step a.2) reveals that the readout metadata are stored as reference metadata in the memory unit: c.1) generating a CAN frame based on the received Ethernet frame such that the CAN frame comprises payload data, which are directly or indirectly encompassed by the Ethernet frame, and the reference tag associated with the readout metadata; and c.2) controlling the CAN BUS interface such that the CAN frame generated in step c.1) is transmitted.

In one or more embodiments, the processing unit is configured to perform the following steps b.1) to b.4) if step a.2) determines that the readout metadata is new metadata: b.1) generating a new reference tag and allocating the readout metadata as new reference metadata with the new reference tag; b.2) storing the new reference tag and the allocated, reference metadata in the memory unit; b.3) generating a CAN frame based on the received Ethernet frame so that the CAN frame comprises the Ethernet frame and the new reference tag; and b.4) controlling the CAN BUS interface so that the CAN frame generated in step b.3) is transmitted.

In one or more embodiments, the processing unit is configured to generate the new reference tag in step b.1) such that the new reference tag comprises a source address and a reference value.

In one or more embodiments, the processing unit is configured to generate the source address such that the source address comprises an address of the device, a classification of the CAN frame, an address field of the CAN frame or a MAC source address represented by the Ethernet frame.

In one or more embodiments, the processing unit is configured to generate the reference value of the new reference tag in step b.1) such that the reference value is unique for the new reference metadata.

In one or more embodiments, the processing unit is configured to generate the reference value for the new reference tag in step b.1) based on the new reference metadata.

In one or more embodiments, the Ethernet frame is structured in a plurality of data layers, wherein each data layer comprising dedicated metadata, wherein the metadata of the Ethernet frame comprises the metadata of at least one data layer of the Ethernet frame.

In one or more embodiments, the processing unit is configured to acquire, in step a.1), as readout metadata, the metadata of the at least one data layer of the Ethernet frame.

In one or more embodiments, the processing unit is configured to acquire, in step c.1), as payload data, the payload data of a highest data layer.

In one or more embodiments, the processing unit is configured to acquire, in step a.1), as first metadata, destination MAC data and source MAC data of a lowest data layer of the Ethernet frame, such that the first metadata is comprised by the readout metadata.

In one or more embodiments, the processing unit is configured to check in step a.1) whether a data layer comprised by the Ethernet frame is configured as an internet protocol, IP, frame, and wherein the processing unit is configured to acquire in step a.1), if the Ethernet frame comprises an IP frame, the metadata of the IP frame as second metadata, such that the second metadata is comprised by the readout metadata.

In one or more embodiments, the processing unit is configured to generate the CAN frame in step b.3) and step c.1) such that the CAN frame comprises a service data unit type, SDT, field that indicates whether the CAN frame either comprises the complete Ethernet frame or does not comprise the readout metadata of the Ethernet frame.

According to a second aspect of the present disclosure, another device for receiving a Controller Area Network, CAN, frame is provided. This device comprising: an Ethernet interface for transmitting Ethernet frames, a CAN BUS interface for receiving CAN frames, a processing unit, and a memory unit, wherein the memory unit is configured to store a plurality of reference tags and for each reference tag allocated reference metadata, wherein the processing unit is configured to perform the following step d.1) for a CAN frame received via the CAN BUS interface: d.1) checking whether the CAN frame comprises a reference tag, which is also stored by the memory unit, wherein the processing unit is configured to perform the following steps e.1) to e.4) if step d.1) reveals that the CAN frame comprises a reference tag, which is also stored by the memory unit: e.1) acquiring the reference metadata allocated to the reference tag as frame metadata from the memory unit, e.2) acquiring payload data from the data field of the CAN frame as frame data; e.3) generating an Ethernet frame such that the Ethernet frame comprises the frame metadata as associated metadata and the frame data as associated payload data; and e.4) controlling the Ethernet interface so that the Ethernet frame generated in step e.2) is transmitted.

In one or more embodiments, the processing unit is configured to perform the following steps f.1) to f.3) if step d.1) reveals that the CAN frame comprises a reference tag, which is not stored by the memory unit: f.1) acquiring an Ethernet frame from the CAN frame, f.2) acquiring metadata directly or indirectly comprised by the Ethernet frame acquired in step f.1); and f.3) storing the reference tag from step d.1) and the acquired metadata as reference metadata allocated to the reference tag in the memory unit.

According to a third aspect of the present disclosure, a method for transmitting a Controller Area Network, CAN, frame through a device is provided, wherein the device comprising an Ethernet interface, a CAN BUS interface, a processing unit, and a memory unit, wherein the memory unit is configured to store a plurality of reference tags and for each reference tag allocated reference metadata, wherein the following steps a.1) to a.2) are to performed by the processing unit for an Ethernet frame received via the Ethernet interface: a.1) acquiring metadata directly and/or indirectly comprised by the received Ethernet frame, the acquired metadata being referred to as readout metadata; and a.2) checking whether the readout metadata from step a.1) either are allocated as reference metadata in the memory unit to a stored reference tag or are new metadata; wherein the following steps c.1) to c.2) are performed by the processing unit if step a.2) shows that the readout metadata is stored as reference metadata by the memory unit: c.1) generating a CAN frame based on the received Ethernet frame such that the CAN frame comprises payload data, which are directly or indirectly represented by the Ethernet frame, and the reference tag associated with the readout metadata; and c.2) controlling the CAN BUS interface so that the CAN frame generated in step c.1) is transmitted.

In accordance with a fourth aspect of the present disclosure, a computer program is provided, comprising executable instructions which, when executed by a processing unit, cause the processing unit being configured to carry out the method of the third aspect and/or one or more embodiments thereof.

### DESCRIPTION OF DRAWINGS

Embodiments of the present disclosure will be described in more detail with reference to the appended drawings. It is to be noted, however, that the appended drawings illustrate only typical embodiments of this invention and are therefore not to be considered limiting of its scope, for the invention may admit to other equally effective embodiments. Advantages of the subject matter claimed will become apparent to those skilled in the art upon reading this description in conjunction with the accompanying drawings, in which like reference numerals have been used to designate like elements, and in which:
Figure 1 shows a simplified block diagram of an embodiment of the device.
Figures 2, 4, 5 and 6 show simplified structures of frames.
Figure 3 shows a table including examples of reference tags and reference metadata.
Figure 7 shows a simplified flow chart of the method.

### DESCRIPTION OF EMBODIMENTS

Vehicles may comprise a variety of devices that participate in communication within the vehicle. The devices may be designed to communicate according to the CAN standard or to communicate according to the Ethernet standard. It has been found to be a challenge if there is no uninterrupted Ethernet-enabled communication link between two Ethernet-enabled devices. In an example, a portion of the communication link may be designed as a CAN-only communication path. To bridge this portion of the communication link, it may be advantageous for an Ethernet frame, which shall be transmitted, to be embedded by a CAN frame so that the Ethernet frame within the CAN frame can bridge said portion of the communication link. As a result, the Ethernet frame can be exchanged between the two Ethernet-enabled devices even though there is no uninterrupted Ethernet-enabled communication link between the said devices.

An Ethernet frame often has many other data in addition to the actual message data, which are also called metadata. This metadata comprises address data, for example. The amount of address data also turns out to be particularly large if the Ethernet frame is structured into a number of data layers, in particular according to the OSI model. For example, the Ethernet frame may comprise an IP frame. The IP frame can be embedded in the payload data of the Ethernet frame. The IP frame itself may comprise, in addition to the actual message data of the IP frame, much other data that forms the metadata of the IP frame. In an example, the IP frame may have embedded another frame, such as a UDP frame. The UDP frame may have much other data, such as header data, in addition to the allocated payload data. This additional data may also be referred to as metadata. The Ethernet frame may therefore contain, in an interleaved manner, a plurality of other frames, each comprising additional metadata. As a result, an Ethernet frame may therefore comprise a plurality of different metadata. However, in order to transmit an Ethernet frame within a CAN frame, it is advantageous to reduce the amount of data of the Ethernet frame before the Ethernet frame is embedded and/or bridged by the CAN frame. The reduction of data can reduce a used load of a CAN bus by CAN frames that have embedded Ethernet frames. In addition, a delay in the transmission of the Ethernet frame within the CAN frame may be reduced if the Ethernet frame has previously been reduced in the allocated amount of data.

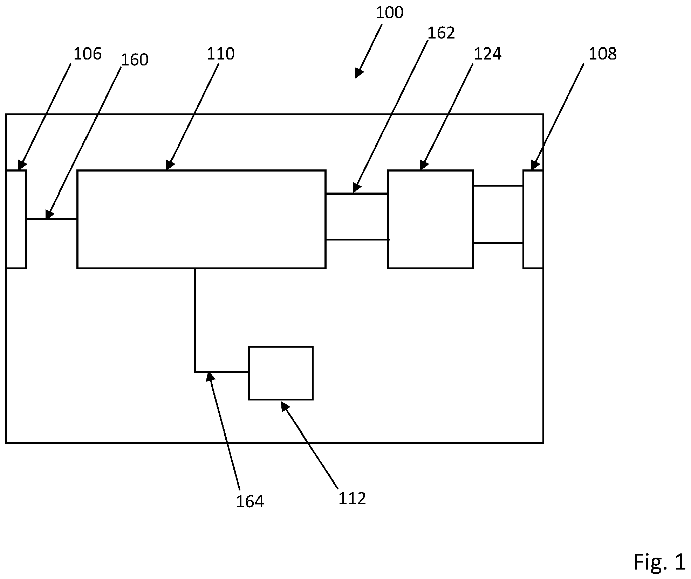

Figure 1 schematically illustrates a simplified block diagram of a device 100 for transmitting a CAN frame 102.

The device 100 comprises a CAN BUS interface 108 for sending CAN frames 102. A transmitted CAN frame 102 may be represented by a differential voltage signal that may be generated at the CAN BUS interface 108 between two allocated pins (not shown). A CAN frame 102 comprises a plurality of bits. The bits of a CAN frame 102 may be represented as a sequence of the different differential voltages. In an example, the device 100 comprises a CAN transceiver 124 configured to generate the differential voltage signal based on a digital input signal that may represent a CAN frame 102 to be transmitted. Thus, the CAN frame 102 may first be transmitted in digital form to the transceiver 124, which then transmits the CAN frame 102 to a CAN bus (not shown) via the differential voltage signal.

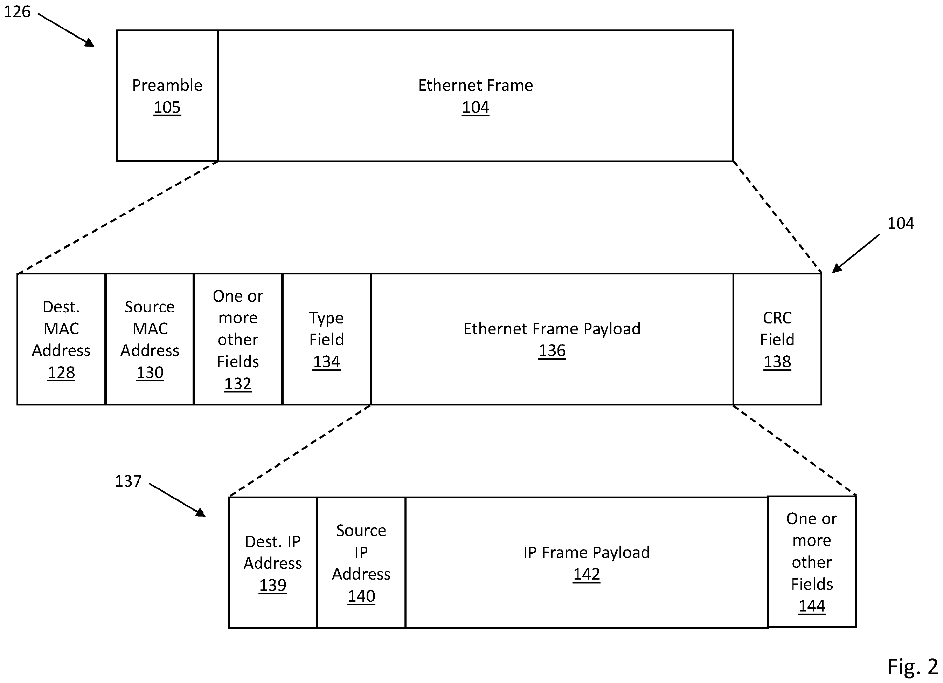

The device 100 also comprises an Ethernet interface 106. In an example, the Ethernet interface may be an physical Ethernet interface 106. In another example, the Ethernet interface may be an logical Ethernet interface 106. Ethernet frames 104 may be received via the Ethernet interface 106. An Ethernet frame 104 may form part of an Ethernet packet 126. Figure 2 schematically illustrates an Ethernet packet 126. The Ethernet packet 126 comprises a preamble field 105 and an Ethernet frame 104. In an example, the Ethernet interface 106 of the device 100 may be alternatively or complementarily configured to receive Ethernet packets 126 such that if an Ethernet packet 126 is received, an Ethernet frame 104 is also received.

The device 100 further comprises a processing unit 110. The Ethernet interface 106 may be coupled to the processing unit 110 via a signal link 160, such that an Ethernet frame 126 received by the Ethernet interface 106 is transmitted from the Ethernet interface 106 to the processing unit 110 via the signal link 160.

In an example, the processing unit 110 is connected to the CAN transceiver 124 via at least one other signal link 162 such that the processing unit 110 can transmit a digital output signal representing a CAN frame 102 to be sent to the CAN transceiver 124, which converts the digital output signal to a differential voltage signal also representing the CAN frame 102 to be sent. In an example, the processing unit 110 may cause a CAN frame 102 to be sent by the means previously explained. In an example, the processing unit 110 comprises a CAN controller. The CAN controller may be configured to generate a digital output signal for the CAN transceiver 124 based on the CAN frame 102, which is to be transmitted.

The device 100 further comprises a memory unit 112. Preferably, the memory unit 112 is coupled to the processing unit 110 via another signal link 164. In an example (not shown), the memory unit 112 may be directly coupled to the processing unit 110. In another example (not shown), it is possible that the memory unit 112 forms an integral part of the processing unit 110. Preferably, the processing unit 110 is coupled to the memory unit 112, in particular via the further signal link 164, such that the processing unit 110 can access data that may be stored by the memory unit 112.

The memory unit 112 is configured to store a plurality of reference tags 114. In an example, a reference tag 114 may be understood as a parameter that can be used for identification. Preferably, a reference tag 114 is formed by a column of characters. Other data, such as reference metadata, may refer to a reference tag 114 such that the reference tag 114 comprises, as a word component, the term "reference". In an example, the term "tag" may be understood as an identification parameter.

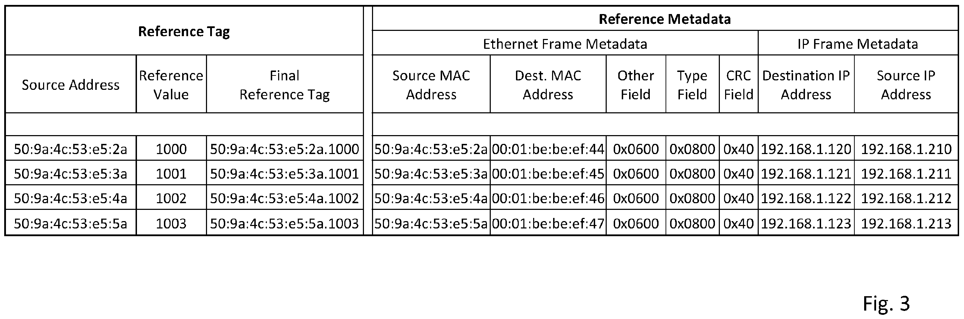

The memory unit 112 is configured to store allocated reference metadata for each reference tag 114. Figure 3 illustrates an example of a table. A plurality of reference tags 114 are shown in the left half of the table. In an example, each final reference tag 114 is formed from two components, namely a source address and a reference value. If reference is made below to reference tags 114, this preferably refers to final reference tags 114. For example, the final reference tag "50:9a:4c:53:e5:2a.1000" is formed from the source address "50:9a:4c:53:e5:2a" and the reference value "1000" as well as a dot"." connecting the source address and the reference value. In an example, the reference tag "50:9a:4c:53:e5:2a.1000" is allocated to reference metadata comprising a source MAC address "50:9a:4c:53:e5:2a", a destination MAC address "00:01:be:ef:44", an other field "0x0600", a type field "0x0800", a CRC field "0x040", a destination IP address "192.168.1.120", and a source IP address "192.168.1.210". Both the reference tag 114 and the allocated reference metadata may be stored by the memory unit 112.

Figure 3 shows still other examples of reference tags 114, with reference metadata allocated with each reference tag 114. The reference metadata may differ from one reference tag 114 to another reference tag 114. This can also be seen from the examples in Figure 3 as well.

The term "reference" is also used for the reference metadata because the reference metadata is allocated with the reference metadata. Thus, if the processing unit 110 may access the reference tag 114 stored in the memory unit 112, the processing unit 110 may also indirectly refer and/or access the allocated reference metadata.

In an example, the reference metadata allocated with a reference tag 114 may comprise or be formed from metadata of an Ethernet frame 104 and metadata of an allocated IP frame 137.

Figure 2 schematically illustrates an example of an Ethernet frame 104 that comprises a destination MAC address 128, a source MAC address 130, at least one other field 132, a type field 134, an Ethernet payload field 136, and a CRC field 138. In an example, an IP frame 137 is embedded in the payload data field 136 of the Ethernet frame 104. Except for the payload field, the aforementioned fields may comprise, form and/or be understood as metadata of the Ethernet frame 104.

Figure 2 also schematically illustrates an example of an IP frame 137. The IP frame 137 may be encompassed by the Ethernet payload field 136 of the Ethernet frame 104. In an example, the IP frame 137 comprises a destination IP address field 139, a source IP address field 140, an IP payload field 142, and preferably at least one other field 144. In an example, the data encompassed by the IP frame 137, except for the data of the IP payload field 136, may comprise, form and/or be understood as metadata of the IP frame 137.

The Ethernet frame 104 may thus comprise metadata that directly relates to the Ethernet frame 104, as well as further metadata that relates to a frame that is directly or indirectly embedded in the payload data field 136 of the Ethernet frame 104. Therefore, in an example, the metadata of the IP frame 137 may also form part of the metadata of the Ethernet frame 104 in a broader sense. Where the Ethernet frame 104 comprises a plurality of interleaved frames, a plurality of metadata may be encompassed by the Ethernet frame 104 due to the plurality of frames encompassed.

An example of an Ethernet frame 104 is shown schematically in Figure 2. If multiple Ethernet frames 104 are transmitted from a first Ethernet node over a communication path to a second Ethernet node, it may be observed that often the address data in the metadata of the Ethernet frames 104 is identical. For example, the source MAC address in the metadata of each of the Ethernet frames 104 may be identical. In an example, the source MAC addresses of the Ethernet frames 104 sent from the same first Ethernet node may be identical. In an analogous manner, the source IP address in the metadata may be identical in each case. Analogously, the same may also apply to the further address data and/or to the further metadata of the Ethernet frames 104. During the transmission of the multiple Ethernet frames 104, the same metadata may be transmitted multiple times. Provided that the communication path between the first Ethernet node and the second Ethernet node comprises a section in which each Ethernet frame 104 is to be transmitted within a CAN frame 102, it is desirable that the multiple transmission of the same metadata of the Ethernet frames 104 is prevented in order to keep the actually used bandwidth of a CAN bus as small as possible and/or in order to prevent, as far as possible, a delay of the transmission of the Ethernet frames 104 due to the use of the CAN frames 102.

The invention is relating to the idea that, if an Ethernet frame 104 is to be transmitted by means of a CAN frame 102, a reference tag 114 can transmitted by of the CAN frame 102 instead of the metadata of the Ethernet frame 104. The metadata, preferably except for one identification field, for instance except for a MAC address or an IP address, may not be included in the reference tag 114. In any case, the metadata does not form the reference tag 114. As a result, the data volume of the reference tag 114 will be smaller, in particular much smaller, than the data volume of the metadata of the Ethernet frame 104. As a further result, by the transmission of the reference tag 114 (instead of the transmission of metadata as such), bandwidth usage of the CAN bus for the transmission of the CAN frame 102 can be reduced. Furthermore, a delay for transmission via the CAN frame 102 can be reduced.

The device 100 of Figure 1 may be used to transmit the CAN frame 102. In an example, if the device 100 receives an Ethernet frame 104 via the Ethernet interface 106, the device 100 may be configured to first check whether the metadata of the received Ethernet frame 104 is already stored as corresponding reference metadata in the memory unit 112. If the metadata of the received Ethernet frame 104 is already stored as reference metadata in the memory unit 112, the allocated reference tag 114 may also be read from the memory unit. The reference tag 114 may represent the allocated reference metadata without the reference metadata being encompassed by the reference tag 114. In an example, the CAN frame 102 to be sent may therefore be generated by the processing unit 110 such that the CAN frame 102 comprises the reference tag 114 and either the payload data of the Ethernet frame 104 or payload data of a preferably most internally interleaved frame of the Ethernet frame 104.

In an example, the device 100 of Figure 1 refers to a device 100 for transmitting the CAN frame 102. In principle, another device (not shown and referred to as a receiver device) may be provided that is configured to receive the CAN frame 102. The receiver device may be configured to reconstruct Ethernet frame metadata based on the reference tag 114 received via the CAN frame 102. From the reconstructed metadata and readout payload of the Ethernet frame 104 or of the preferably most internally interleaved frame of the Ethernet frame 104, the receiver device may be configured, in an example, to fully reconstruct the Ethernet frame 104.

In the following, reference is again made to the device 100 of Figure 1, which is configured to send the CAN frame 102.

The processing unit 110 of the device 100 is configured to perform steps a.1) and a.2), discussed below, for an Ethernet frame 104 received via the Ethernet interface 106.

The processing unit 110 is configured to acquire, in the step a.1), metadata that is directly or indirectly encompassed by the received Ethernet frame 104. The acquired metadata is also referred to as readout metadata. In an example, the readout metadata may refer solely to the metadata of the Ethernet frame 104 outside of the payload data field 136 of the Ethernet frame 104. In this case, the readout metadata may be referred to as readout metadata directly encompassed by the Ethernet frame 104. The metadata indirectly encompassed by the Ethernet frame 104 may relate to metadata of the at least one frame 137 that may be encompassed by the payload data field 136 of the Ethernet frame 104. The read metadata of an Ethernet frame 104 may therefore comprise the metadata directly encompassed by the Ethernet frame 104 and/or the metadata indirectly encompassed by the Ethernet frame 104.

The processing unit 110 of the device 100 is configured to check in the step a.2) whether the readout metadata from step a.1) either corresponds to reference metadata allocated with a reference tag 114 stored in the memory unit 112 or is new metadata. If it is determined as check result by the processing unit 110 in step a.2) that the readout metadata corresponds to reference metadata allocated with a reference tag 114, the reference tag 114 may be used to generate the CAN frame 102 instead of using the readout metadata as such. Therefore, transmission of the actual readout metadata by means of the CAN frame 102 may be prevented for this case.

The case in which the readout metadata from step a.1) is new metadata will be discussed later. First of all, the case in which the read metadata corresponds to reference metadata that is allocated to a reference tag 114 stored in the memory unit shall be assumed.

The processing unit 110 of the device 100 is configured to perform the following steps c.1) and c.2) if the result of the check from step a.2) is that the read metadata is stored as reference metadata in the memory unit 112.

The processing unit 110 of the device 100 is configured to generate a CAN frame 102 based on the received Ethernet frame 104 in step c.1), such that the CAN frame 102 comprises the payload data, which is directly or indirectly encompassed by the Ethernet frame 104, and the reference tag 114, which is allocated with the readout metadata. The payload data directly encompassed by the Ethernet frame 104 may refer to the data of the payload data field 136. In this case, the metadata directly encompassed by the Ethernet frame 104 alone is saved. However, at least one other frame, such as an IP frame 137, may be encompassed by the payload data field 136 of the Ethernet frame 104. The payload data indirectly encompassed by the Ethernet frame 104 may refer to payload data of a frame encompassed by the payload data field 136 of the Ethernet frame 104. In an example, the payload data indirectly encompassed by the Ethernet frame 104 may relate to payload data of the payload data field 142 of the IP frame 137 or to the payload data of another interleaved frame.

The processing unit 110 of the device 100 is preferably configured to generate the CAN frame 102 based on the received Ethernet frame 104 in step c.1), such that the CAN frame 102 is free of the readout metadata from the Ethernet frame 104. Therefore, the CAN frame 102 may be generated in such a manner without the CAN frame 102 comprising the readout metadata. As a result, the readout metadata may not a part of the data of the CAN frame 102. However, the CAN frame 102 comprises the reference tag 114 representing the readout metadata without the readout metadata being comprised by the reference tag 114. The reference tag 114 has a substantially smaller data volume than the readout metadata.

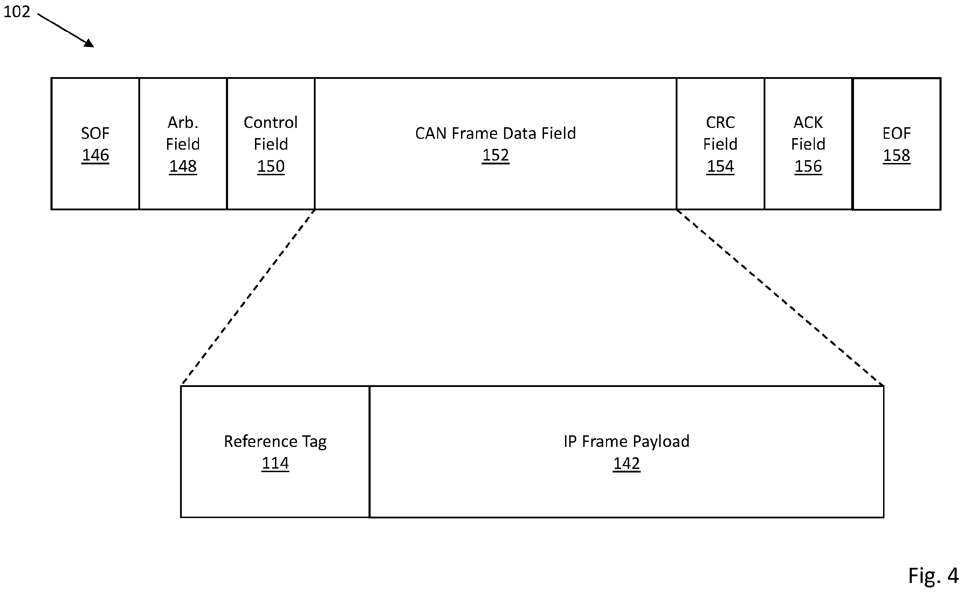

Figure 4 schematically illustrates an example of a CAN frame 102. The CAN frame 102 may comprise and/or be formed of a start of frame, SOF, field 146, an arbitration field 148, a control field 150, a payload field 152, a CRC field 154, an acknowledgement, ACK, field 156, and an end of frame, EOF, field 158. As can also be seen schematically from Figure 4, in an example, both the reference tag 114 and the payload data of the IP frame 137 may be encompassed by the data field 152 of the CAN frame 102. The payload data of the IP frame 137 forms an example of payload data that is indirectly encompassed by the Ethernet frame 104.

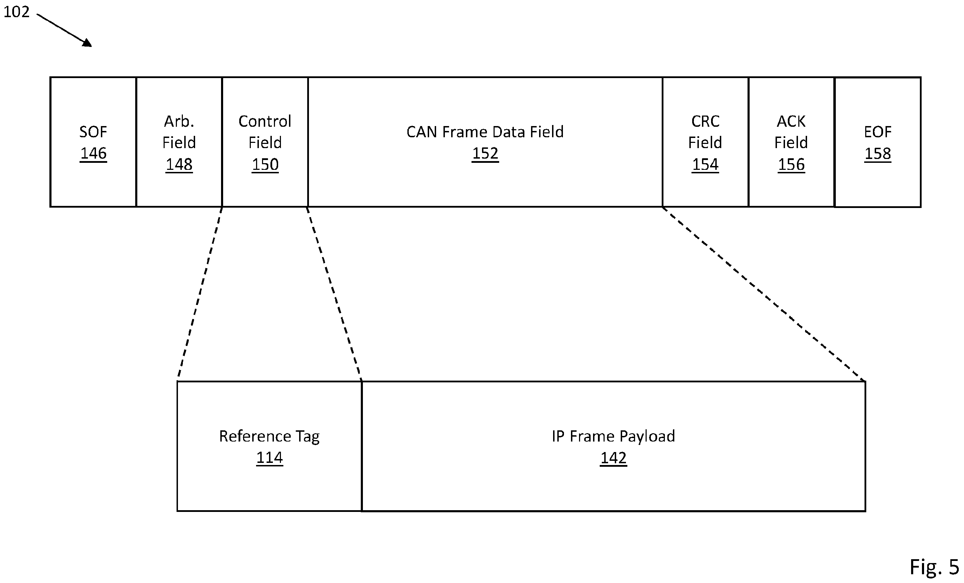

Figure 5 schematically illustrates another example of a CAN frame 102. In this example, the processing unit 110 of the device 100 may be configured to generate the CAN frame 102 based on the received Ethernet frame 104 in step c.1) such that the reference tag 114 is encompassed by a control field 150 of the CAN frame 102, in particular by an AF field of the CAN frame 102. In this case, the data field 152 of the CAN frame 102 may be free of the reference tag 114. Furthermore, the processing unit 110 of the device 100 may be configured to generate the CAN frame 102 based on the received Ethernet frame 104 in step c.1), such that the payload data of the Ethernet frame 104 is encompassed by the data field 152 of the CAN frame 102. The payload data of the Ethernet frame 104 is the payload data directly or indirectly encompassed by the Ethernet frame 104. It is noted that the CAN frame 102 may be structured as a CAN XL frame according to the CIA 610 and 611 standard. The CAN XL frame as an embodiment of the CAN frame 102 is preferably considered when referring to an AF field.

The processing unit 110 of the device 100 is configured to control the CAN BUS interface 108 in step c.2), such that the CAN frame 102 generated in step c.1) is sent. In an example, to control the CAN BUS interface 108, the processing unit 110 may first send a digital signal via the signal link 162 to a CAN transceiver 124 that generates a differential voltage signal at the CAN BUS interface 108 based on the digital signal, wherein the differential voltage signal represents the CAN frame 102. Via the CAN transceiver 124, the processing unit 110 can therefore control the generation of the differential voltage signal at the CAN BUS interface 108, so that this is understood to mean in particular an embodiment of the control of the CAN BUS interface 108 for sending the CAN frame 102.

In another example, the CAN BUS interface 108 may be allocated with the CAN transceiver 124. In this case, controlling the CAN transceiver 124 by the processing unit 110 to generate the differential voltage signal representing the CAN frame 102 may be understood as an embodiment for controlling the CAN BUS interface 108 so as to cause the CAN frame 102 to be sent.

In an example, an Ethernet frame 104 is understood to comprise a frame that may not comprise all fields as defined in the IEEE 802.3 standard.

In an example, a plurality of predefined reference tags 114 are stored by the memory unit 112. Preferably, allocated and predefined reference metadata is stored by the memory unit 112 for each reference tag 114. The predefined reference tags 114 and the predefined reference metadata may help to achieve a particularly simple and fast implementation of the device 100.

In practical application, however, it may take considerable effort to predict which metadata will preferably occur repeatedly with Ethernet frames 104, so that corresponding metadata may be suitable to form reference metadata for memory unit 112.

In an example, the processing unit 110 of the device 100 is configured to perform the following steps b.1) and b.2), and preferably also steps b.3) and b.4), if it is determined as a check result in step a.2) by the processing unit 110 that the readout metadata is new metadata. Preferably, therefore, the processing unit 110 performs steps b.1) to b.4) only if it is determined by the processing unit 110 in step a.2) that the readout metadata does not correspond to any of the reference metadata already stored by the memory unit 112, each of which is allocated with a stored reference tag 114.

Preferably, the processing unit 110 is configured to generate a new reference tag 114 in step b.1). Further, the processing unit 110 may be configured to allocate, in the step b.1), the readout metadata from step a.1) with the new reference tag 114 as new reference metadata. This may create a new reference group comprising a reference tag 114 and allocated new reference metadata. The memory unit may be configured to store a plurality of such reference groups. Preferably, the processing unit 110 generates the new reference tag 114 in step b.1) such that the new reference tag 114 is distinct from any reference tags 114 that may already have been stored by the memory unit 112. Each reference tag 114 may therefore be a unique reference tag 114.

Preferably, the processing unit 110 is configured to store the new reference tag 114 and the reference metadata allocated with the new reference tag 114 in the memory unit 112 in step b.2). Preferably, the reference tag 114 and the allocated reference metadata are stored in the memory unit 112 by the processing unit 110 such that the corresponding allocation is also stored.

Steps b.1) and b.2) may cause an update of the memory unit 112 in terms of the stored reference tags 114 the allocated reference metadata. For example, an expansion may occur if an Ethernet frame 104 is received that comprises metadata that does not correspond to stored reference metadata. In particular, if the device 100 is used to communicate within a vehicle in which a plurality of similar communications are performed with the same subscriber nodes, it is expected that a frequency of expansion of the memory unit 112 with new reference tags 114 and new allocated reference metadata will decrease. Rather, it is expected that similar Ethernet frames 104 will be sent frequently so that the device 100 can be used to reduce the load on a CAN bus.

In an example, it has been found advantageous for a receiver device (i.e., not the device 100) to be informed via a CAN frame 102 that a new reference tag 114 has been generated. Further, the receiver device should be enabled to determine what metadata is allocated with the new reference tag 114.

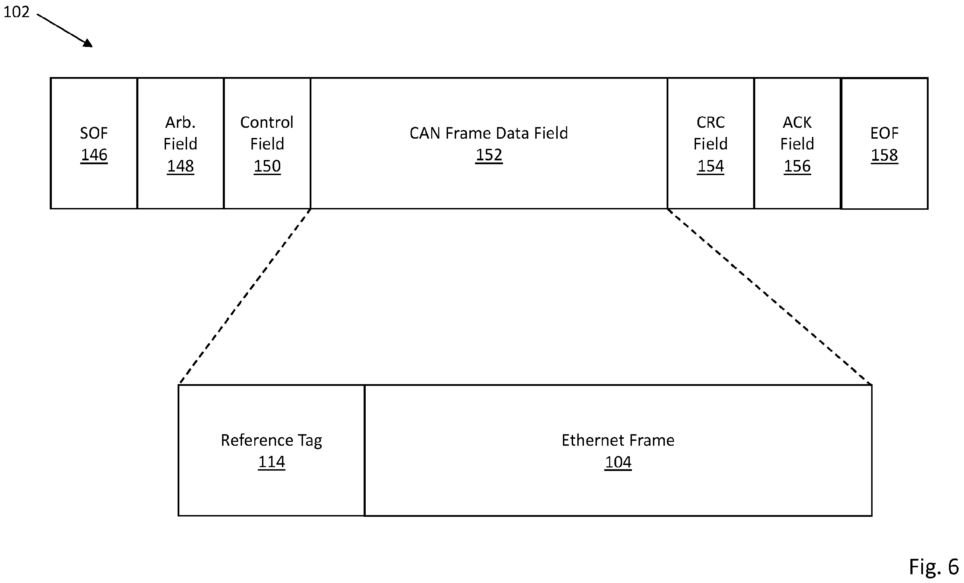

In an example, the processing unit 110 is configured to generate a CAN frame 102 based on the received Ethernet frame 104 in step b.3), such that the CAN frame 102 comprises both the Ethernet frame 104 and the new reference tag 114. Figure 6 schematically illustrates an example of a CAN frame 102. It can also be seen schematically from Figure 6 that the data field 152 of the CAN frame 102 can comprise both the new reference tag 114 and the complete Ethernet frame 104. If this CAN frame 102 is received by a receiver device (i.e., not the device 100), the receiver device may readout the reference tag 114 from the CAN frame 102 and the metadata directly and/or indirectly encompassed by the Ethernet frame 104 (from the CAN frame 102), which readout metadata may be allocated with the reference tag 114. The receiver device may store the reference tag 114 and the allocated readout metadata. If another (second) CAN frame 102 also comprising the reference tag 114 is received by the receiver device, the receiver device may access the metadata allocated with and stored in the reference tag 114 to reconstruct an Ethernet frame 104 based on the stored metadata and the payload data from the second CAN frame 102.

The receiver device may be configured to send a feedback signal to the device 100 if an error occurs during the reconstruction of the Ethernet frame 104 by the receiver device. The feedback signal may represent a CAN frame, which may be referred to as a return CAN frame. The return CAN frame may represent the error in the reconstruction of the Ethernet frame 104. In an example, the receiving device may be configured to send the return CAN frame to the device 100, wherein a predetermined value in the SDT field of the return CAN frame indicates that the Ethernet frame 104 could not be reconstructed correctly. The Ethernet frame 104 (for which an reconstruction error occurred) may further be indicated in the return CAN frame, such as by reusing the reference tag 114 in the return CAN frame.

Figure 6 shows the example of the CAN frame 102, wherein the data field 152 of the CAN frame 102 comprises both the reference tag 114 and the full Ethernet frame 104. In another example, the reference tag 114 may be encompassed by a control field 150, in particular an AF field of the control field 150, wherein the full Ethernet frame 104 is encompassed by the data field 152 of the CAN frame 102.

In an example, the processing unit 110 is configured to control the CAN BUS interface 108 in step b.4) so that the CAN frame 102 generated in step b.3) is transmitted. With respect to sending a CAN frame 102, reference is made to the preceding explanations in an analogous manner.

In an example, the processing unit 110 is configured to generate the new reference tag 114 in step b.1) such that the new reference tag 114 comprises a source address and a reference value. Several examples of reference tags 114 are provided in the left half of the table of Figure 3. Each final reference tag 114 may be an example of a new reference tag 114. Each final reference tag 114 may comprise a source address and a reference value, wherein in the example from the table in Figure 3, the source address and the reference value are connected by a dot ".". If generating the new reference tag 114, the source address may refer to the source MAC of the Ethernet frame 104, for example. Furthermore, if generating the new reference tag 114, a random or incremented reference value may be generated. If the reference value is an incremented reference value, the reference value may be incremented by a certain value, such as a value of 1, with each generation of a new reference tag 114. Generating a new reference tag 114 in the manner previously explained provides the advantage that each reference tag 114 is a unique reference tag 114. This also allows the reference tag 114 and/or preferably the metadata allocated with the reference tag 114 to be uniquely accessed from the memory unit 114 by means of the processing unit 110.

In an example, the processing unit 110 is configured to generate a new reference tag 114 including a source address such that the source address comprises an address of the device 100, a classification of the CAN frame 102, an address field of the CAN frame 102, or an address represented by the Ethernet frame 104, particularly a MAC address of the Ethernet frame 104. The classification of the CAN frame may be defined by data of a classification field of the CAN frame 102. In an example, the classification field may refer to the AF field of a CAN frame 102 configured according to the CiA 610 and/or CiA 611 standard. In this case, the CAN frame 102 may be referred to as an CAN XL frame 102. In another example, the classification field may refer to an identifier of a CAN frame 102 preferably configured according to the ISO 11898-1 standard.

In an example, the processing unit 110 is configured to generate a new reference tag 114 including the reference value in step b.1) such that the reference value is unique to the new reference metadata allocated with the new reference tag 114. In an example, if a plurality of Ethernet frames 104 are successively sent from the same sender node and received via the Ethernet interface 106 of the device 100, the plurality of Ethernet frames 104 may have the identical source MAC address. To ensure that the reference tag 114 is unique even for such cases, the reference tag 114 is generated by the processing unit 110 such that the reference value of the reference tag 114 is unique to new reference metadata. In an example, the reference value may be generated as an incremented reference value such that, for example, a reference value is changed by a certain value for each new reference tag 114.

In an example, the processing unit 110 is configured to generate the reference value of the new reference tag 114 in step b.1) based on the new reference metadata. For example, the processing unit may execute a predefined calculation rule based on the new reference metadata to determine the new reference value based on the calculation result. In an example, the new reference value may correspond to the calculation result.

In an example, the received Ethernet frame 104 is structured into a plurality of data layers. Each data layer may comprise dedicated metadata. The metadata of the Ethernet frame 104 preferably comprises the metadata of at least one of the data layers of the Ethernet frame 104. In an example, the data layers may refer to the OSI model. As such, the Ethernet frame 104 is preferably located in the lowest data layer according to the OSI model. In a data layer above the Ethernet frame 104, the IP frame 137 may be arranged according to the OSI model. Previously, it was explained that the IP frame 137 may be encompassed by the data field 136 of the CAN frame 102. Another frame, such as a User Diagram Protocol, UDP, frame, may be encompassed by a data field 142 of the IP frame 137. The UDP frame may be arranged in a data layer according to the OSI model above the data layer of the IP frame. A data field of the UDP frame may comprise another frame, such as a "SOME/IP" frame, which is arranged in a data layer according to the OSI model above the data layer of the UDP frame. The metadata of the Ethernet frame 104 may comprise the metadata of all data layers of the Ethernet frame 104.

In an example, the processing unit 110 is configured to acquire, in the step c.1), as payload data, the payload data from a data field of a frame of the highest data layer of the Ethernet frame 104. In the previous example, it was explained that multiple frames, such as the IP frame 142, may be comprised by the Ethernet frame 104 in an interleaved manner, wherein the multiple frames are structured in data layers arranged on top of each other according to the OSI model. The frame arranged to the topmost or highest data layer according to the OSI model preferably comprises the relevant payload data to be acquired in step c.1) by means of the processing unit 110. In the example from the previous paragraph, for example, the payload data may be acquired from the data field of the "SOME/IP" frame as payload data in step c.1).

In an example, the processing unit 110 is configured to acquire, in step a.1), as first metadata, a destination MAC address and a source MAC address of a frame according to a lowest data layer of the Ethernet frame, such that the first metadata is encompassed by the read metadata.

In an example, the processing unit 110 is configured to check in step a.1) whether a frame allocated with a data layer that is comprised by the Ethernet frame is configured as an Internet Protocol, IP, frame. Further, in step a.1), if the Ethernet frame comprises an IP frame, the processing unit 110 may be configured to acquire the metadata of the IP frame as second metadata such that the second metadata is comprised by the read metadata.

In an example, the metadata of the Ethernet frame 104 may comprise the first metadata and/or the second metadata and/or additional metadata of the Ethernet frame 104.

In an example, the processing unit 110 of the device 100 is configured to generate the CAN frame 102 in step b.3) and step c.1), respectively, such that the CAN frame 102 comprises a service data unit type, SDT, field that indicates whether the CAN frame 102 either comprises the full Ethernet frame 104 or does not comprise the readout metadata of the Ethernet frame 104. In this example, the processing unit 110 may be configured to generate the CAN frame 102 in accordance with the CiA 610 and/or CiA 611 standard. The SDT field may be a part of the control field 150 of the CAN frame 102. Provided that the CAN frame 102 fully comprises the Ethernet frame 104, the SDT field may be generated by the processing unit 110 such that the SDT field has a value of, for example, "04". In the case that the Ethernet frame 104 is not fully encompassed by the CAN frame 102, but in the case that the CAN frame 102 encompasses the reference tag 114 and payload data of the Ethernet frame 104, the SDT field may be generated by the processing unit 110 such that the SDT field has the value "06", for example. In the event that a CAN frame 102 is received by a receiver device (not shown), the receiver device may determine, based on the SDT field of the CAN frame 102, whether the CAN frame 102 comprises either the full Ethernet frame 104 or whether the CAN frame 102 comprises the reference tag 114 and the payload data of the Ethernet frame 104 without the metadata of the Ethernet frame 104 being comprised by the CAN frame 102. By taking the SDT field into account, the reconstruction of the Ethernet frame 104 by the receiver device may be simplified.

The present disclosure further relates to a device, which may also be referred to as a receiver device, configured to receive a Controller Area Network, CAN, frame 102. Hereinafter, reference is made to the term receiver device to avoid confusion with the previously explained device 100 that is adapted to transmit the CAN frame 102.

In an example, the receiver device may be configured analogously to the previously explained device 100. For the receiver device, reference is made in an analogous manner to the advantageous explanations, preferred features, technical effects and advantages as previously explained for the device 100.

The receiver device comprises an Ethernet interface for transmitting Ethernet frames 104, a CAN BUS interface for receiving CAN frames 102, a processing unit, and a memory unit. The memory unit of the receiver device is configured to store a plurality of reference tags 114 and reference metadata allocated for each reference tag 114. The processing unit of the receiver device is configured to perform the following step d.1) for a CAN frame 102 received via the CAN BUS interface: d.1) checking whether the received CAN frame 102 comprises a reference tag 114 that is also stored in the memory unit. Further, if step d.1) determines that the CAN frame 102 comprises a reference tag 114 that is also stored by the memory unit, the processing unit of the receiver device is configured to perform the following steps e.1) to e.4): e.1) acquiring the reference metadata allocated with the reference tag 114 as frame metadata from the memory unit; e.2) acquiring payload data from the data field 152 of the CAN frame 102 as frame data; e.3) generating an Ethernet frame 104 such that the Ethernet frame 104 comprises the frame metadata as associated metadata and the frame data as associated payload data; and e.4) controlling the Ethernet interface of the receiver device such that the Ethernet frame 104 generated in step e.2) is transmitted.

In an example, the processing unit of the receiver device is configured to perform the following steps f.1) to f.3) if it is determined in step d.1) that the CAN frame 102 comprises a reference tag 114 that is not also stored in the memory unit: f.1) acquiring an Ethernet frame 104 from the CAN frame 102, f.2) acquiring metadata directly or indirectly comprised in the Ethernet frame 104 acquired in step f.1); and f.3) storing the reference tag 114 from step d.1) and the acquired metadata as reference metadata allocated with the reference tag 114 in the memory unit.

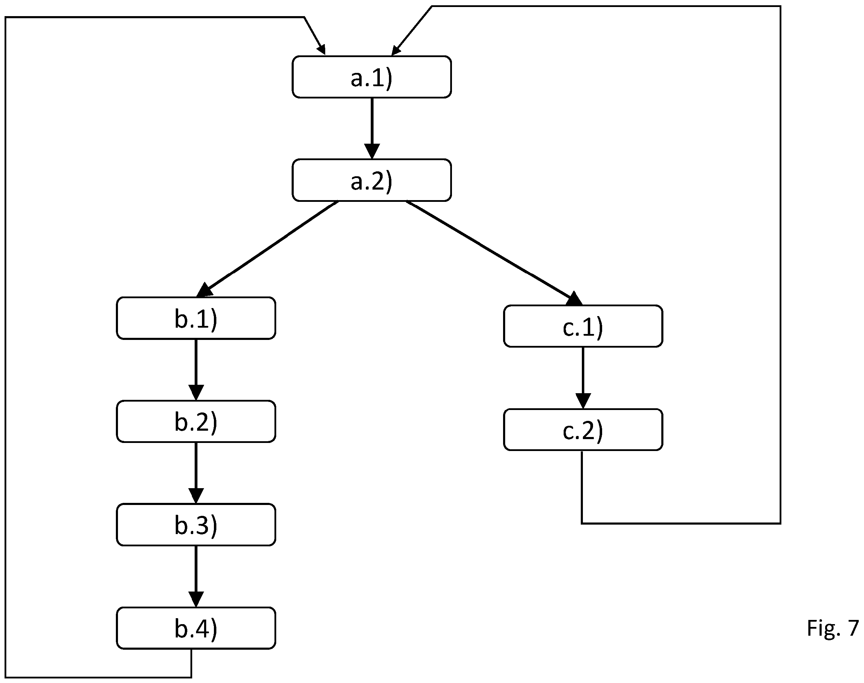

In addition, the present disclosure describes a method. Figure 7 schematically illustrates an example of a flow chart of the method. The method steps a.1) and a.2) preferably correspond to the steps a.1) and a.2) that can be performed by the processing unit 110 of the device 100 of Figure 1. The method steps c.1) and c.2) preferably correspond to the steps b.1) and b.2) which can be carried out by the processing unit 110 of the apparatus 100 of Figure 1. Preferably, for the method steps a.1) and a.2) as well as c.1) and c.2), reference is made in an analogous manner to the preferred explanations, advantageous features, technical effects and advantages as explained for steps a.1) and a.2) or b.1) and b.2).

The method is for transmitting a Controller Area Network, CAN, frame 102 by means of a device 100 comprising an Ethernet interface 106, a CAN BUS interface 108, a processing unit 110, and a memory unit 112, wherein the memory unit 112 is configured to store a plurality of reference tags 114 and, for each reference tag 114, allocated reference metadata. According to the method, the following steps a.1) to a.2) are performed by the processing unit 110 for an Ethernet frame 104 received via the Ethernet interface 106: a.1) acquiring metadata directly or indirectly comprised by the received Ethernet frame 104, the acquired metadata being referred to as readout metadata; and a.2) checking whether the readout metadata from step a.1) is either allocated as reference metadata in the memory unit 112 with a stored reference tag 114 or is new metadata. According to the method, the following steps c.1) to c.2) are performed by the processing unit 110 if step a.2) determines that the readout metadata is stored as reference metadata in the memory unit 112: c.1) generating a CAN frame 102 based on the received Ethernet frame 104 such that the CAN frame 102 comprises payload data directly or indirectly represented by the Ethernet frame 104 and the reference tag 114 allocated with the readout metadata, but preferably without the CAN frame 102 comprising the readout metadata; and c.2) controlling the CAN BUS interface 108 such that the CAN frame 102 generated in step c.1) is transmitted.

In an example, the method provides that the following steps b.1) to b.4) are performed by the processing unit 110 if it is determined in step a.2) that the readout metadata is new metadata: b.1) generating a new reference tag 114 and associating the readout metadata as new reference metadata with the new reference tag 114; b.2) storing the new reference tag 114 and the allocated reference metadata in the memory unit; b.3) generating a CAN frame 102 based on the received Ethernet frame 104 such that the CAN frame 102 comprises the Ethernet frame 104 and the new reference tag 114; and b.4) controlling the CAN BUS interface 108 such that the CAN frame 102 generated in step b.3) is transmitted.

For the method, reference is preferably made in an analogous manner to the advantageous explanations, preferred features, technical effects and advantages as previously explained for the device 100.

Although the described exemplary embodiments disclosed herein focus on devices, systems, and methods for using same, the present disclosure is not necessarily limited to the example embodiments illustrate herein. For example, various embodiments of providing

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. A Control Area Network, CAN, device for transmitting a CAN frame, the device comprising:
an Ethernet interface for receiving Ethernet frames,
a CAN BUS interface for transmitting CAN frames,
a processing unit, and
a memory unit,
wherein the memory unit is configured to store a plurality of reference tags and for each reference tag allocated reference metadata,
wherein the processing unit is configured to perform the following steps a.1) and a.2) for an Ethernet frame received via the Ethernet interface:
a.1) acquiring metadata directly and/or indirectly comprised by the received Ethernet frame, the acquired metadata being referred to as readout metadata; and
a.2) checking whether the readout metadata from step a.1) either are reference metadata allocated to a reference tag stored in the memory unit or are new metadata;
wherein the processing unit is configured to perform the following steps c.1) to c.2) if step a.2) reveals that the readout metadata are stored as reference metadata in the memory unit:
c.1) generating a CAN frame based on the received Ethernet frame such that the CAN frame comprises payload data, which are directly or indirectly encompassed by the Ethernet frame, and the reference tag associated with the readout metadata; and
c.2) controlling the CAN BUS interface such that the CAN frame generated in step c.1) is transmitted.

2. The device according to the preceding claim, wherein the processing unit is configured to perform the following steps b.1) to b.4) if step a.2) determines that the readout metadata is new metadata:
b.1) generating a new reference tag and allocating the readout metadata as new reference metadata with the new reference tag;
b.2) storing the new reference tag and the allocated, reference metadata in the memory unit;
b.3) generating a CAN frame based on the received Ethernet frame so that the CAN frame comprises the Ethernet frame and the new reference tag; and
b.4) controlling the CAN BUS interface so that the CAN frame generated in step b.3) is transmitted.

3. The device according to the preceding claim, wherein the processing unit is configured to generate the new reference tag in step b.1) such that the new reference tag comprises a source address and a reference value.

4. The device according to the preceding claim, wherein the processing unit is configured to generate the source address such that the source address comprises an address of the device, a classification of the CAN frame, an address field of the CAN frame or a MAC source address represented by the Ethernet frame.

5. The device according to any of the preceding claims 3 to 4, wherein the processing unit is configured to generate the reference value of the new reference tag in step b.1) such that the reference value is unique for the new reference metadata.

6. The device according to the preceding claim, wherein the processing unit is configured to generate the reference value for the new reference tag in step b.1) based on the new reference metadata.

7. The device according to any of the preceding claims, wherein the Ethernet frame is structured in a plurality of data layers, wherein each data layer comprising dedicated metadata, wherein the metadata of the Ethernet frame comprises the metadata of at least one data layer of the Ethernet frame.

8. The device according to the preceding claim, wherein the processing unit is configured to acquire, in step a.1), as readout metadata, the metadata of the at least one data layer of the Ethernet frame.

9. The device according to any of the preceding claims 7 to 8, wherein the processing unit is configured to acquire, in step c.1), as payload data, the payload data of a highest data layer.

10. The device according to any of the preceding claims, if additionally depending on claim 7, wherein the processing unit is configured to acquire, in step a.1), as first metadata, destination MAC data and source MAC data of a lowest data layer of the Ethernet frame, such that the first metadata is comprised by the readout metadata.

11. The device according to any of the preceding claims, if additionally depending on claim 7, wherein the processing unit is configured to check in step a.1) whether a data layer comprised by the Ethernet frame is configured as an internet protocol, IP, frame, and wherein the processing unit is configured to acquire in step a.1), if the Ethernet frame comprises an IP frame, the metadata of the IP frame as second metadata, such that the second metadata is comprised by the readout metadata.

12. The device according to any of the preceding claims, wherein the processing unit is configured to generate the CAN frame in step b.3) and step c.1) such that the CAN frame comprises a service data unit type, SDT, field that indicates whether the CAN frame either comprises the complete Ethernet frame or does not comprise the readout metadata of the Ethernet frame.

13. A device for receiving a Controller Area Network, CAN, frame, the device comprising:
an Ethernet interface for transmitting Ethernet frames,
a CAN BUS interface for receiving CAN frames,
a processing unit, and
a memory unit,
wherein the memory unit is configured to store a plurality of reference tags and for each reference tag allocated reference metadata,
wherein the processing unit is configured to perform the following step d.1) for a CAN frame received via the CAN BUS interface:
d.1) checking whether the CAN frame comprises a reference tag, which is also stored by the memory unit,
wherein the processing unit is configured to perform the following steps e.1) to e.4) if step d.1) reveals that the CAN frame comprises a reference tag, which is also stored by the memory unit:
e.1) acquiring the reference metadata allocated to the reference tag as frame metadata from the memory unit,
e.2) acquiring payload data from the data field of the CAN frame as frame data;
e.3) generating an Ethernet frame such that the Ethernet frame comprises the frame metadata as associated metadata and the frame data as associated payload data; and
e.4) controlling the Ethernet interface so that the Ethernet frame generated in step e.2) is transmitted.

14. The device according to the preceding claim, wherein the processing unit is configured to perform the following steps f.1) to f.3) if step d.1) reveals that the CAN frame comprises a reference tag, which is not also stored by the memory unit:
f.1) acquiring an Ethernet frame from the CAN frame,
f.2) acquiring metadata directly or indirectly comprised by the Ethernet frame acquired in step f.1); and
f.3) storing the reference tag from step d.1) and the acquired metadata as reference metadata allocated to the reference tag in the memory unit.

15. A method for transmitting a Controller Area Network, CAN, frame through a device comprising an Ethernet interface, a CAN BUS interface, a processing unit, and a memory unit, wherein the memory unit is configured to store a plurality of reference tags and for each reference tag allocated reference metadata,
wherein the following steps a.1) to a.2) are to performed by the processing unit for an Ethernet frame received via the Ethernet interface:
a.1) acquiring metadata directly and/or indirectly comprised by the received Ethernet frame, the acquired metadata being referred to as readout metadata; and
a.2) checking whether the readout metadata from step a.1) either are allocated as reference metadata in the memory unit to a stored reference tag or are new metadata;
wherein the following steps c.1) to c.2) are performed by the processing unit if step a.2) shows that the readout metadata is stored as reference metadata by the memory unit:
c.1) generating a CAN frame based on the received Ethernet frame such that the CAN frame comprises payload data, which are directly or indirectly represented by the Ethernet frame, and the reference tag associated with the readout metadata; and
c.2) controlling the CAN BUS interface so that the CAN frame generated in step c.1) is transmitted.
